# EUROPEAN PATENT SPECIFICATION

(11) **EP 3 104 598 B1**
(45) Date of publication and mention of the grant of the patent: **03.06.2020**
(21) Application number: 15397526.3
(22) Date of filing: 08.06.2015
(51) Int. Cl.: H04N 7/18, G08B 13/196, G08B 17/12

(54) **METHOD AND SYSTEM FOR PROVIDING ACCESS TO A VIDEO CONTENT**
VERFAHREN UND SYSTEM ZUR BEREITSTELLUNG DES ZUGANGS AUF EINEN VIDEOINHALT
PROCEDE ET SYSTEME PERMETTANT DE FOURNIR UN ACCES A UN CONTENU VIDEO

(43) Date of publication of application: 14.12.2016
(73) Proprietor: Teleste Oyj, 20660 Littoinen (FI)
(72) Inventor: Ketola, Tommi, 20540 Turku (FI); Lintuala, Janne, 33820 Tampere (FI); Virtanen, Jussi, 20720 Turku (FI)
(74) Representative: Berggren Oy, Tampere

(56) References cited:
- WO-A2-2006/006081
- US-A1- 2012 293 046
- US-A1- 2013 156 185

## Description

### TECHNICAL FIELD

The present disclosure relates generally to a video surveillance system; and more specifically, to methods and systems for recording videos and providing an authorized access to a video content.

### BACKGROUND

In today's highly unsecure social society, most people are concerned about the security or loss of their own property due to thefts, accidents, and the like. A person may lose his valuable assets if he is not aware of a fire in his house or an owner of a factory may not be aware of any threat of damage to the factory. In addition, in many instances, most people are not aware of any intrusion taking place at a particular time which eventually leads to loss of valuable assets. To mitigate problems like these, people install alarm and security systems in their houses, offices, factories and the like.

In general, in case of intrusion by an outsider or in case of fire, these security systems communicate with a control centre for alerting one or more authorities. The security systems installed in a house need to be monitored on a continuous basis in order to report an intrusion or any other event within a desired time frame. Conventional security systems typically protect a building using make/break contacts strategically placed at doors, windows and other entry points.

Going further, the present security systems known in the art communicate an intrusion or any other event to a limited extent. A user or an operator of the system may not be able to verify what is actually happening inside the property or the cause of any event taking place. Moreover, the operator of the system needs to be physically present at the location for controlling the damage to the property. Furthermore, in case video surveillance is used, the operator of the system has to deal with a large amount of video data which might be irrelevant for the operator. In addition, some of the content recorded by a security camera may be sensitive and the user may want to restrict the access to the sensitive content by third parties. The user may want the third parties to access only content which is relevant for them. For example, the user may want a fire department to access a video feed of their home only during the event of a fire or the user may want a security firm to access a video feed of their home during any robbery or intrusion by unknown people.

Further, the conventional methods and systems for providing access to the video content from the security system installed inside a property are not very efficient. The conventional methods and systems do not allow the users to maintain a control over the type of content which can be accessed by third parties. In addition, the conventional methods and systems do not allow the users to encrypt the content recorded by the video camera installed in their property. Moreover, the conventional methods and systems do not allow the users to maintain a list of other users who are authorized to access the video content. Furthermore, the conventional methods and systems do not allow the access of the video content to other parties for a certain pre-defined interval of time. Moreover, the conventional methods and systems do not provide better access management.

WO2006/006081 discloses a video surveillance system for protecting the privacy of people and goods under surveillance. The cameras of the system comprise an analysis module allows for event detection from the camera view and scrambling of the video data to encoded. Compressed video streams leaving the camera(s) are scrambled and signed for the purpose of privacy and data integrity verification. The server(s) receive(s), store(s), manage(s) and dispatch(es) the video sequences to a variety of clients and users with different device capabilities, channel characteristics and preferences. Different versions of the video data is shown to different users, depending on their access rights.

US2013/156185 discloses a video surveillance system, which is rather similar to that of D1, where a video input unit is configured to collect videos and a video analysis unit is configured to analyse content of the collected video by recognizing the collected video and detecting an event. The video data is encoded in one of the modes: a non-encryption, a regions-of-interest encryption and a full video encryption, and transmitted to a surveillance video receiving apparatus, wherein the mode of encoding depends on the detected event and the access rights of the user of the receiving apparatus. Therefore, in light of the foregoing discussion, there exists a need to overcome the aforementioned drawbacks of the existing video surveillance systems.

### SUMMARY

The present disclosure seeks to provide a method for providing access to a video content.

The present disclosure also seeks to provide a system for recording and encrypting videos.

In one aspect, an embodiment of the present disclosure provides a method for providing access to a video content. The method comprises steps of:
- providing a first encryption key;
- recording a first video with at least one video camera during a first time interval;
- encrypting the first video with the first encryption key;
- sending the encrypted first video to a video storage server;
- detecting a triggering event;
- providing a second encryption key based on the triggering event;
- recording a second video with the at least one video camera during a second time interval;
- encrypting the second video with the second encryption key;
- sending the encrypted second video to the video storage server;
- providing a first decryption key to at least a first user wherein the first decryption key is usable to decrypt the encrypted first video; and
- providing a second decryption key to at least a second user wherein the second decryption key is usable to decrypt the encrypted second video.

In another aspect, an embodiment of the present disclosure provides a system for providing access to a video content. The system comprises
- at least one video camera;
- a communication interface for communicating with at least one external system and for receiving triggers from triggering events; and
- a central processing unit coupled to a memory, which memory is configured to
   - buffer video from the at least one video camera, and
   - store instructions,
wherein the central processing unit, based on the instructions stored in the memory, is configured to
- monitor triggers received via the communication interface,
- provide a key based on the type of the triggers,
- use the key to encrypt the buffered video to make an encrypted video,
- send the encrypted video to a video storage server via the communication interface,
- provide a first decryption key to at least a first user, wherein the first decryption key is usable to decrypt the encrypted video, and
- provide a second decryption key to at least a second user, wherein the second decryption key is usable to decrypt the encrypted video.

Embodiments of the present disclosure substantially eliminate or at least partially address the aforementioned problems in the prior art, and enables encryption of videos in real time and provides authorized and restricted access to users for viewing the encrypted videos and eliminate any threat to the facility.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1A illustrates a system for providing access to a video content; in accordance with an embodiment of the present disclosure;
FIG. 1B illustrates a system for providing the access to the video content; in accordance with an embodiment of the present disclosure;
FIG. 2 illustrates a system for providing access to the video content to one or more third parties, in accordance with an embodiment of the present disclosure;
FIG. 3A illustrates a system showing an example for encrypting video data, in accordance with an embodiment of the present disclosure;
FIG. 3B illustrates a system showing an example for encrypting the video and storing the encrypted videos, in accordance with an embodiment of the present disclosure;
FIG. 3C illustrates a system showing an example for accessing the encrypted videos, in accordance with an embodiment of the present disclosure;
FIG. 3D illustrates a system showing an example for decrypting the encrypted videos, in accordance with an embodiment of the present disclosure; and
FIGS. 4A-B illustrate a flowchart for providing the access to the video content, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides a method for providing access to a video content. The method comprises the steps of providing a first encryption key; recording a first video with at least one video camera during a first time interval; encrypting the first video with the first encryption key; sending the encrypted first video to a video storage server; detecting a triggering event; providing a second encryption key based on the triggering event; recording a second video with the at least one video camera during a second time interval; encrypting the second video with the second encryption key; sending the encrypted second video to the video storage server; providing a first decryption key to at least a first user wherein the first decryption key is usable to decrypt the encrypted first video; and providing a second decryption key to at least a second user wherein the second decryption key is usable to decrypt the encrypted second video.

In another aspect, an embodiment of the present disclosure provides a system for providing access to a video content. The system comprises at least one video camera. The system also comprises a communication interface for communicating with at least one external system and for receiving triggers from triggering events. The system also comprises a central processing unit coupled to a memory configured to buffer video from the at least one video camera and store instructions. The central processing unit is configured to triggers received via the communication interface, provide a key based on the type of the triggers, use the key to encrypt the buffered video to make an encrypted video, send the encrypted video to a video storage server via the communication interface, provide a first decryption key to at least a first user, wherein the first decryption key is usable to decrypt the encrypted video, and provide a second decryption key to at least a second user, wherein the second decryption key is usable to decrypt the encrypted video.

According to an embodiment, a video camera is installed in a facility. For example, the facility can be a house, a factory, an office, a workshop or any other premises.

In one embodiment, the video camera can be a bullet camera, a dome camera, an infrared/night vision camera, an Internet Protocol (IP) camera, a wireless camera and the like. The video camera is configured to record videos in real time. Further, the video camera can be enabled to record the video content continuously. In an example, the video content may correspond to a sequence of still images.

According to an embodiment, the video camera can be installed inside the facility at a suitable location. For example, the video camera is installed at a suitable location in the facility for capturing a large degree of area inside the facility. Further, the video camera is installed at a particular place desired by a user of the plurality of users for recording and capturing the video content of the particular place inside the facility.

In one embodiment, the video camera can be installed on an exterior side of the facility. According to another embodiment, a plurality of video cameras can be installed inside the facility. For example, a camera (say, a dome camera) can be installed inside a house near an entrance door of the house, and a camera (say, a bullet camera) can be installed outside the house near the entrance door of the house.

In an embodiment, the video camera is continuously monitored by a user of one or more users. In an example, the user can be an owner of the facility. Further, the one or more users control and monitor video feeds from the video camera. For example, the video camera is installed in the facility for security purposes and recording one or more events for alerting the one or more users.

In an embodiment, the video camera records the one or more events in a pre-defined interval of time. Alternatively, the video camera records the one or more events based on a time set by the user.

In an embodiment, the video camera collects video data. For example, the video data corresponds to one or more recordings in the facility. Further, the video camera is associated with a router. The router connects the video camera to the internet. The router can be a wired router or a wireless router. Moreover, the router can include a core router, an edge router, a broadband router, a virtual router and a wireless router. The router can be a WLAN (Wireless Local Area Network) router, an ADSL (Asymmetric Digital Subscriber Line) router, a DSL (Digital Subscriber Line) router and the like. The router can be a home server/gateway and located inside a private residence (the facility) and provide one or more services to one or more devices located inside or outside the facility. Moreover, the router or the home gateway can include a functionality of encrypting data associated with the video camera. In addition, the router can be associated with a control unit. Further, the video camera is associated with the control unit. Optionally, the video camera is directly associated with the control unit. Alternatively, the video camera is associated with the control unit through the router. In addition the home gateway can be commutatively coupled with one or more sensors and inputs for receiving information. The information can be used to create a trigger.

In an embodiment, the video camera is wirelessly connected to the control unit. In another embodiment, the video camera is connected to the control unit through a hardwired connection. In addition, the control unit is configured to control one or more parameters associated with the video camera. Further, the control unit controls one or more operations of a security system inside the facility.

In an embodiment, the control unit enables the user of the one or more users inside the facility to control one or more parameters associated with the video camera and/or one or more operations performed by the security system inside the facility. The one or more operations performed by the security system correspond to providing access to the video content based on an authorization to the one or more users.

In an embodiment, the control unit provides the user with a user interface for controlling the one or more parameters and the one or more operations.

In an embodiment, the control unit enables a specific set of users to control the one or more parameters and the one or more operations. Further, each of the specific set of users is provided access to the control unit through a pre-defined password or a key. Moreover, the pre-defined password or the key is different for each of the specific set of users.

Further, the video camera can be associated with a communication network. In addition, the communication network enables the user of the one or more users to connect the video camera to the internet. The communication network can be a wired, wireless, or a combination thereof. The communication network can include a Local Area Network (LAN), a Wide Area Network (WAN), a Metropolitan Area Network (MAN), a Wireless Local Area Network (WLAN), a Wireless Wide Area Network (WWAN), Wireless Metropolitan Area Network (WMAN), the Internet, second generation (2G) telecommunication networks, third generation (3G) telecommunication network, fourth generation (4G) telecommunication network, and Worldwide Interoperability for Microwave Access (WiMAX) network.

In addition, the video camera can be associated with a video storage server. The video camera can be connected to the video storage server through the communication network. The video storage server receives the video data from the video camera. For example, the video storage server receives the one or more videos wirelessly over the communication network. Further, the video storage server stores the one or more videos recorded by the video camera. Moreover, the video storage server stores the one or more videos in real time.

In an embodiment, the video storage server includes a database for storing the one or more videos. Further, the user of the one or more users may access the one or more videos stored on the video storage server. Moreover, the video camera transmits the one or more videos in a pre-defined interval of time. In an example, the video camera transmits a video of the one or more videos in a series of mini clips. The video storage server maintains a repository of the one or more videos and allows the user of the one or more users to access the one or more videos based on a pre-determined criterion.

In an embodiment, the video camera can be associated with a security system. For example, the video camera is associated with the security system through the communication network. In addition, the video storage server can be associated with the security system. Moreover, the security system enables encryption of the one or more videos recorded by the video camera by providing keys to encrypt the videos. Also, the encryption of the one or more videos is performed for providing access to the user of the one or more users having an authorization for decrypting the one or more videos. Further, the encryption of the one or more videos is performed for restricting an unauthorized access to the one or more videos to one or more users who are not authorized. Term encryption key refers to using a key to encrypt data and the term decryption key refers to using a key to decrypt data. The key (used for encrypting and decrypting) itself can be the same (bit-wise) for both uses.

In addition, the security system includes a key server. The key server is an integral part of the security system. The security system handles or controls one or more operations performed by the key server. In addition, the security system controls a decision associated with providing access to the one or more users to the one or more videos stored in the video storage server by providing the one or more users with one or more decryption keys to decrypt videos. Alternatively, the security system controls the decision based on the one or more operations performed by the key server. Further, the key server manages a group of encryption keys and a group of decryption keys. According to an embodiment, the key server is different from the video storage server.

Based on an alternative embodiment, encryption keys to encrypt the videos recorded by the video camera can be generated in the video camera or associated control unit or gateway. In addition the security system can be configured to store and distribute one or more public keys associated with one or more users. The public keys can be used to encrypt encryption keys (which have been used to encrypt the videos) generated by the video camera or associated control unit or gateway. The encrypted encryption keys can be opened by the users that have the corresponding private keys. The opened keys can be used to decrypt the encrypted video.

According to an embodiment, the method further comprises providing a group of encryption keys from a key server and selecting the first and second encryption keys from said group of encryption keys, i.e. the provision of encryption keys is in fact selection of encryption keys from the group of encryption keys. In the following description, when the group of encryption keys is referred to, it is to be understood to refer also to any encryption or decryption key created by a component of the system.

In an embodiment, the key server stores the group of encryption keys and the group of decryption keys. For example, the key server maintains a repository for storing the group of encryption keys. The key server encrypts each of the one or more videos recorded by the video camera in real time. The encryption is done by utilizing the group of encryption keys stored in the key server.

In an embodiment, a first video of the one or more videos is encrypted with a single encryption key from the group of encryption keys. Further, the encryption key from the group of encryption keys utilized for encrypting the first video encrypts the first video for a first pre-defined interval of time. Moreover, the encryption key is altered based on a pre-defined criterion.

In an embodiment, the encryption is done for allowing different groups of people to access the one or more videos. As explained above, the encryption can be done by various components of the system. In case a key server is used, it allocates the encryption key from the group of encryption keys to each of the different groups of people for accessing the video feed.

In an embodiment, the video camera can be associated with a first terminal and a second terminal. The first terminal can be associated with a first user and the second terminal can be associated with a second user. In addition, the first terminal and the second terminal can include a laptop, a mobile, a tablet, a desktop computer, a personal digital assistant or any other portable terminal. Moreover, the first user and the second user can correspond to the owner of the facility. Also, the first user or the second user can be any person or a third party. The third party can include a security organization, a fire department and the like. Further, a plurality of terminals can be associated with a corresponding plurality of users.

In an embodiment, the first user and the second user are enabled to access the video content associated with the video camera. The access to the video content to the first user and the second user is provided through the decryption key. Further, each of the first user and the second user is provided a decryption key for accessing the video content. The decryption key can be the same or different for each user. In addition, the first terminal and the second terminal can be associated with the video storage server. Moreover, the first terminal and the second terminal can be associated with the security system. Furthermore, the first terminal and the second terminal can be associated with the key server.

In an embodiment, the first terminal and the second terminal can be associated with the video storage server, the security system and the key server through the communication network.

In an embodiment, the video camera can be associated with a plurality of users. In addition, the video storage server can be associated with the plurality of users. Further, the security system can be associated with the plurality of users. Also, the key server can be associated with the plurality of users. Furthermore, the plurality of users correspond to one or more individuals or groups of individuals who control and monitor the video content associated with the video camera. Each of the plurality of users is associated with a corresponding terminal for viewing and accessing the video content from the video camera. The terminal includes but is not limited to a smart phone, a laptop, a desktop computer, a tablet and a personal digital assistant.

In an embodiment, the key server provides the group of encryption keys to the at least one video camera. The group of encryption keys is provided before initialization of the recording of the video content by the video camera.

In an embodiment, the group of encryption keys is provided at start of the recording of the video content by the video camera. Alternatively, the group of encryption keys is provided during the recording of the video content by the video camera. Otherwise, the group of encryption keys are provided at regular pre-defined intervals of time to the video camera.

In an embodiment, the video camera stores the group of encryption keys in a database. Additionally, the video camera fetches the encryption key from the group of encryption keys in a sequential order.

In an embodiment, the group of encryption keys is provided to an alarm server, a router or a gateway. Moreover, the alarm server, router or gateway is communicatively coupled with the at least one video camera. The alarm or security system may thus comprise a further alarm server as a separate entity, but it is not mandatory. The group of encryption keys are provided for encrypting the video content recorded by the video camera. Further, an encryption key from the group of encryption keys encrypts the video content for the pre-defined interval of time.

In this present description, the encryption of the video can be done by various devices, as is explained above and below. The encrypted video can thus also be sent by various devices to the users, and a general term of sending user agent can be used. For example, the sending user agent can be a control unit, or a video camera . Additionally a general term of federated user agent can be used for a receiving user terminal (first receiving or second receiving terminal).

In an embodiment, the time interval is decided based on a pre-determined criterion. Alternatively, the interval of time is decided in real time. For example, a first time interval is decided prior to the recording of the first video.

In an embodiment, the key server provides at least two encryption keys from the group of encryption keys to the video camera. The group of encryption keys are provided for encrypting the video content associated with the video camera.

In one embodiment, the key server can be associated with the camera for providing a group of encryption keys to the camera for encrypting videos recorded by the camera. For example, the video camera selects a first encryption key from the group of encryption keys. The video camera records a first video during a first time interval. In addition, the video camera encrypts the first video during the recording with the selected first encryption key from the group of encryption keys.

In an embodiment, the encryption of the first video is done by assigning a unique key to the video recorded during the first time interval. The unique key corresponds to a unique Identification (ID) or a unique code utilized for encrypting the first video.

In an embodiment, the encryption of the first video is performed by the security system. In an example, a camera records a first video. The key server encrypts the first video with an encryption key from the group of encryption keys.

In an embodiment, the first video is recorded in a series of mini clips of 1 second. Each of the mini clips associated with the first video is encrypted with the first encryption key. Each of the mini clips is recorded and encrypted and simultaneously sent to the video storage server. The series of mini clips encrypted with the first encryption key is sent to the video storage server.

According to an embodiment, the video camera sends or transmits the encrypted first video to the video storage server. The encrypted first video is transmitted in real time.

In an embodiment, the triggering event is detected by the at least one video camera. It may be detected by another device, such as a smoke detector or an alarm system. The triggering event takes place in the facility. The triggering event corresponds to any event or activity which is suspicious or unusual taking place inside the facility or optionally outside the facility, in its vicinity (such as a fire next to the outside wall or an attempt to break in). The triggering event takes place at the end of the first time interval of the first video recorded by the video camera.

In an embodiment, the end of the first time interval depends on the detection of the triggering event. The recording of the first video stops at the detection of the triggering event. Alternatively, the first video is recorded until the detection of the triggering event. Otherwise, the first video is encrypted with the first encryption key until the detection of the triggering event.

According to an embodiment, the triggering event detected by the video camera can include receiving an alarm from a security alarm, detecting a command from a user interface of the security system, receiving an alarm from a fire alarm system and receiving a request from a communication device via the communication network.

In an embodiment, the video camera is associated with the fire alarm system for receiving the alarm. The video camera is equipped with a sound detector for detecting the sound of the alarm from the fire alarm system. The video camera is equipped with a receiver for receiving a request from the terminal. The request is provided by the user of the plurality of users.

In one embodiment, the triggering event helps in notifying the plurality of users of an occurrence of an event in the facility. In an example, the camera detects a first triggering event T1 (say, a detection of an alarm from the fire alarm system). The camera started recording the first video X1 at a time t0. The first video X1 is recorded till a time t1. The time t1 corresponds to the time at which the first triggering event T1 takes place. Therefore, the first video is recorded for a first time interval of tO-tl.

According to an embodiment, the video camera selects a second encryption key from the group of encryption keys on the detection of the triggering event. The first encryption key is replaced with the second encryption key on the detection of the triggering event. The change of the first encryption key to the second encryption key takes place in a fraction of a second. The video camera records a second video during a second time interval. The start of the second time interval corresponds to the end of the first time interval. The video camera immediately initiates the recording of the second video.

In addition, the video camera encrypts the second video during the recording with the selected second encryption key from the group of encryption keys. The encryption of the second video is done by assigning the unique key to the video recorded during the second time interval. The unique key corresponds to the unique ID or the unique code utilized for encrypting the second video. The encryption of the second video is performed by the video camera. Moreover, the end of the second time interval is based on the detection of another triggering event.

In an example, the video camera selects a second encryption key E2 from the group of encryption keys E. The second encryption key E2 is utilized for encrypting a second video X2 starting at the time t1 based on the detection of the first triggering event T1 (the detection of the alarm from the fire alarm system) at the time t1. The second video X2 is recorded and encrypted with the second encryption key E2 for a time t1-t2.

Furthermore, the video camera sends or transmits the encrypted second video to the video storage server. The encrypted second video is transmitted in real time. The second video can be recorded in the series of mini clips of 1 second. Each mini clip associated with the second video is encrypted with the second encryption key. The mini clip is recorded and encrypted and simultaneously sent to the video storage server. The series of mini clips encrypted with the second encryption key is sent to the video storage server.

In an embodiment, the video camera changes the second encryption key to a third encryption key based on the detection of another triggering event. The triggering event causing the change in the second encryption key to the third encryption key is different from the triggering event which caused the change in the first encryption key to the second encryption key.

In an embodiment, the third encryption key encrypts a third video. The video camera selects the second encryption key if the triggering event is an alarm from the security alarm. The video camera selects the third encryption key if the triggering event is a detected pre-defined command from a user interface of the security system.

In an embodiment, the video camera selects a fourth encryption key if the triggering event is received as an alarm from the fire alarm system. The video camera selects a fifth encryption key if the triggering event is a pre-determined request from a pre-determined communication device via the communication network.

In an embodiment of the present disclosure, the video camera selects a sixth encryption key if no triggering event is detected. In an example, the camera X detects a second triggering event T2 (say, detecting a command from a user interface of the security system). The camera X starts recording a third video X3 at the time t2. The second video X2 can be recorded till a time t2. The time t2 corresponds to the time at which the second triggering event T2 takes place. The third video X3 can be recorded for a third time interval of t2-t3.

In one embodiment, a first user of the plurality of users can be associated with the first terminal for accessing the encrypted first video from the video storage server. The first user is authorized to access the encrypted first video only. Similarly, a second user of the plurality of users can be associated with the second terminal for accessing the encrypted second video from the video storage server. The first user and the second user interact with the video storage server through the corresponding terminals.

In one embodiment, the first user receives a first decryption key from the key server on the corresponding terminal. The first decryption key is provided by the key server to the first user for decrypting the encrypted first video. On the same lines, the second user receives a second decryption key from the key server on the corresponding terminal. The second decryption key is provided by the key server to the second user for decrypting the encrypted second video.

In an embodiment, the first decryption key is provided to the first user who is authorized to receive the first decryption key and decrypt the encrypted first video. Similarly, the second decryption key is provided to the second user who is authorized to receive the second decryption key and decrypt the encrypted second video.

According to an embodiment, the first user of the plurality of users accesses the corresponding terminal to access the encrypted first video. The terminal is configured to receive the encrypted first video from the video storage server.

In an embodiment, the video storage server transmits the encrypted first video to the terminal associated with the first user. The encrypted first video is received through software installed on the terminal.

In an embodiment, the first user may be an owner of the facility and have access to the encrypted second video as well. The first user may receive the first decryption key and the second decryption key for accessing the corresponding encrypted first video and the corresponding encrypted second video.

In an embodiment, the first user (the owner of the facility) has full control over the access of the video feed from the video camera for the second video and other plurality of users.

In an embodiment, the access to the video feed is based on a type of the triggering event. The type of the triggering event corresponding to the access to the video feed to one or more third parties is decided by the first user. Each of the one or more third parties accesses the video through the encryption key. Further, each of the one or more third parties access a different video feed. In an example, a user currently present at his house turns on a video camera for keeping a watch on the house. The user accesses a first video feed encrypted with a first encryption key from the video camera with a decryption key known to the user.

In an example, the user leaves the house and activates a security system (trigger event) in the house. A second video feed is now encrypted with a second encryption key and the second video feed can be accessed by a security firm (which has been provided with access to the keys for opening the second encrypted video), either directly from the camera or from the video storage server. In another example, the user is at the house and a fire alarm inside the house triggers (triggering event) and a third video feed is now recorded and encrypted with a third encryption key. The third video feed can be accessed by fire department (which has been provided with access to the keys for opening the third encrypted video), either directly from the camera or from the video storage server. In an example, the user is in the house and manually pushes an alarm button (triggering event) in case of any medical emergency. The user activates the alarm and a fourth video feed is encrypted with a fourth encryption key for allowing a medical centre to view the fourth video feed by using the fourth encryption key known to the medical centre and gaining information about the situation.

According to an embodiment, the first user receives the first decryption key on the corresponding terminal and the second user receives the second decryption key on the corresponding terminal. The first decryption key corresponds to the first encryption key encrypting the first video and the second decryption key corresponds to the second encryption key encrypting the second video. The first user accesses the encrypted first video on the corresponding terminal and inputs the first decryption key for decrypting the encrypted first video and the second user accesses the encrypted second video on the corresponding terminal and inputs the second decryption key for decrypting the encrypted second video. Thus, according to an embodiment, a terminal associated with at least first user is configured to receive the first encrypted video from the video storage server and to receive the first decryption key from the key server and to decrypt the video with the terminal using the first decryption key.

In an embodiment, the first user views the decrypted first video on the corresponding terminal and the second user views the decrypted second video on the corresponding terminal.

In an embodiment, the first encryption key is same as the first decryption key and the second encryption key is same as the second decryption key. The first user and the second user view the corresponding decrypted first video and the corresponding decrypted second video for taking further actions. The first user views both the first video and the second video. The availability or access to the video content from the video camera is based on a time of a day. In example, a person goes to office between 8 A.M to 5 P.M sets a time of 8 A.M to 5 P.M in which access to video feed from a video camera installed in his house can be provided to a security firm.

In an embodiment, the triggering event includes sending a short message service (SMS), push notification or similar to the video camera or to the control unit or to the router.

In an embodiment, the security system can include a user master key. The user master key is is used to facilitate the distribution of encryption and decryption keys.

In an embodiment, the user interacts with the security system for authorizing the one or more third parties for access to the video content using a control unit. The security system can be associated with a receiving terminal. The receiving terminal corresponds to a user belonging to a third party of the one or more parties for accessing the video content from the video camera. The receiving terminal interacts with the security system for receiving decryption key for the video content from the video camera. The access to the video content is performed by using the decryption key provided by the security system.

In an embodiment, the video camera maintains a data and a list of federations. The video camera utilizes the security system for transmitting the data to selected third parties of the one or more third parties. The security system generates data such as encryption keys (which can typically also used as decryption key to decrypt video) based on a request of the video camera. In addition, the security system also generates a ciphertext encryption key using the user's master key. The ciphertext encryption key can be used to securely transmit encpryption key with the data The ciphertext encryption key corresponds to the encryption key for encrypting the data. The cihertext encryption key is utilized in a context of a trust grant.

The security system may provide an interface to the control unit for managing the list of federations. Furthermore, the list of federations corresponds to a list of the third parties of the one or more third parties to which the user wants to give access of the video content of the video camera.

In one embodiment, each item in the list of federations includes a federation identifier and a federated user list. The federation identifier corresponds to a unique field. Moreover, a format of the federation identifier is known to the control unit. The user associates the federation identifier with a particular device or a particular state of the security system with the control unit. The particular device can include a video camera of a plurality of video cameras installed in the facility. The federation identifier is different for each state of the security system. In an example, a single federation identifier may be utilized for a single video camera when the fire alarm system inside the facility is in an alarm state.

In one embodiment, the federated user list corresponds to a list of unique identifiers for each of the plurality of users. Each unique identifier is utilized for identifying a user of the plurality of users authorized to access the security system and access the video content. Further, each video camera inside the facility synchronizes the list of federations with the security system. Furthermore, each video camera utilizes the list of federations assigned by the user. Moreover, each video camera uses the federations addressed to the particular video camera.

In an embodiment, the camera adds a federation data with the transmitted and the encrypted data during a state of grant of federation. The federation data can include a federation sync sequence, a currently used encryption key in the cipher text format and the federated user list currently valid. Moreover, the federation sync sequence is a byte sequence for performing the decryption of the video content. The ciphertext encryption key format provides a random element for preventing replay attack. The federated user list carries the federation grants. Moreover, the federation data is encrypted with the encyption key for protection against changes and protecting identity of the federated users in the federated users list form eavesdropping.

In an embodiment, the receiving terminal belonging to a third party requests the decryption of the received ciphertext encryption key with the federation data. The security system verifies the federation data for allowing the access. The verification can be performed by checking whether the federation sync sequence is valid or not. The access is allowed if the federation sync sequence is valid. The access is denied if the federation sync sequence is invalid. The verification can be performed by comparing the ciphertext encyption key included in the federation data with the ciphertext encryption key in the request for the decryption. The matching of the ciphertext encryption key included in the federation data with the ciphertext encryption key in the request for the decryption results in grant of access. The non- matching of the ciphertext encryption key included in the federation data with the ciphertext encryption key in the request for the decryption results in an invalid request and the access is denied.

In an embodiment, the verification can be performed by comparing the identity of the user associated with the receiving terminal with the federated user list. The access is granted based on a successful comparison of the identity of the receiving user with the federated user list. The access is denied based on an unsuccessful comparison of the identity of the receiving user with the federated user list. If the access is granted, the security system decrypts the ciphertext encryption key using the master key of sending user and returns the encryption key to the receiving terminal in a response message. The response message is encypted during the transmission (for example, using HTTPS protocol). The receiving terminal will use the encryption key as the decryption key to decypt the tramsitted video data.

In an embodiment, different methods can be utilized for encoding or encrypting the federated users list if size of the federation data is limited. The different methods can include a group encoding and a bit-field encoding. The group encoding can include generating a federation group identifier by the security system for each distinct federated user list. Moreover, the federation group identifier can be included in the federation data. The bit-field encoding method can include assigning each distinct user a bit in an array of bytes. The security system encodes the bit for the sending video camera and decodes the bit for the receiving terminal. In addition, the size of the federation data depends on a number of the federated users. The security system keeps the list of federated users to bit-field position for each user.

In an embodiment, the encryption is done according to an Advanced Encryption Standards (AES). For example, the video camera can be configured to provide data according to HTTP (Hyper Text Transfer Protocol) Live Streaming. The HTTP Live streaming enables to create video stream that video segments of 1-10 seconds of video clips. In addition, the video segments are encrypted with AES 128 (Advanced Encryption Standard) according to HTTP Live Streaming Internet-Draft (currently: draft-pantos-http-live-streaming-16).

In an embodiment, the video camera utilizes the encryption keys to encrypt the video segments. Each of the video segments can be encrypted by using a common encryption key. The encryption key can be changed periodically by using the first encryption key for first 10 seconds and the second encryption key for 10 seconds and the like.

In an embodiment, the data associated with the video content is sent to the video storage server as a meta data. Further, the meta data includes a segment Uniform Resource Locator (URL) information, time, duration information and the encrypted key to open the segment (of 10 seconds).

In an embodiment, the encryption keys and the decryption keys are transmitted in ciphertext format, where first user's master key has been used in the encryption. The second user wants to access the video content. The second user downloads a playlist corresponding to one or more ciphertext encryption keys for opening the video content on the terminal. The second user utilizes the time information for downloading the appropriate playlist the video from the video storage server.

In an embodiment, the second user connects to the security system via a secure way and requests the security system to open the one or more ciphertext encryption keys with the first user's master key. The security system opens the one or more key envelopes based on the authorization of the second user as granted by the first user. The second user accesses the video based on the successful authorization.

In an embodiment, the first user provides the ciphertext encryption keys directly to the second user. Moreover, the second user opens the ciphertext encryption keys by sending the key envelopes to the security system.

In an embodiment, the first user sends an encrypted package containing one or more keys to the second user. The encrypted package corresponds to a package containing information associated with which users are allowed to be provided with the encryption keys. Moreover, the second user sends the encrypted package to the security system along with a user credentials. The security system matches the user credentials and the encrypted package before submitting the encryption keys.

In an alternative embodiment, the system can be used to collect and distribute any type of digital data from facility in addition or instead of video content. For example the system can be used to collect sensor information from a house, encrypt the sensor information using first set of encrypting keys and sending the encrypted sensor information data to a content server for storage and later access. The sensor data encryption keys can be changed based on triggering events.

Further in the present disclosure the term video data can refer at least to video, combination of video and audio or audio only.

Additionally stored and encrypted video includes information which can be used by a user to fetch decrypting keys from key server.

The present disclosure allows the user in the facility to provide the video content to a selected group of people. In addition, the present disclosure allows the user to alert one or more authorities regarding any fire hazard or any intrusion taking place in the facility. Moreover, the present disclosure allows keeping a watch on the facility in the event of the user not being present in the facility. Further, the present disclosure allows the one or more authorities to respond in time and take necessary actions in order to prevent any damage or further damage to the facility. Furthermore, the present disclosure provides encryption of videos in real time and prevents unauthorized access of the video feeds from other users who are not authorized to access the video feed. Further, the present disclosure allows the users to maintain a list of other users who are authorized to access the video feeds from the video camera and provides access to the video feeds to the users stored in the list. Moreover, the present disclosure restricts the access to sensitive content associated with a user in the facility. Further, present disclosure provides the access to the content for a pre-defined interval of time.

Further the present disclosure allows to use symmetric or asymmetric keys to encrypt and decrypt videos. In a first example, the system uses symmetric keys where the key server provides the keys for encrypting the videos and the key server also provides keys for users to decrypt the videos. The keys are provided to users based on access rules. The encrypting and decrypting keys are bit-wise same keys in this example.

In a second example, the users create public keys with their own private keys (referred as an asymmetric key method). The public keys are sent to the security system to be accessed by for example video camera or gateway server. The public keys can be used to encrypt keys that have been used to encrypt the videos. This way the video package including the encrypted video and associated encrypted encryption (decryption) keys can be opened only by the user with the private key associated with the public key.

### DETAILED DESCRIPTION OF THE DRAWINGS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

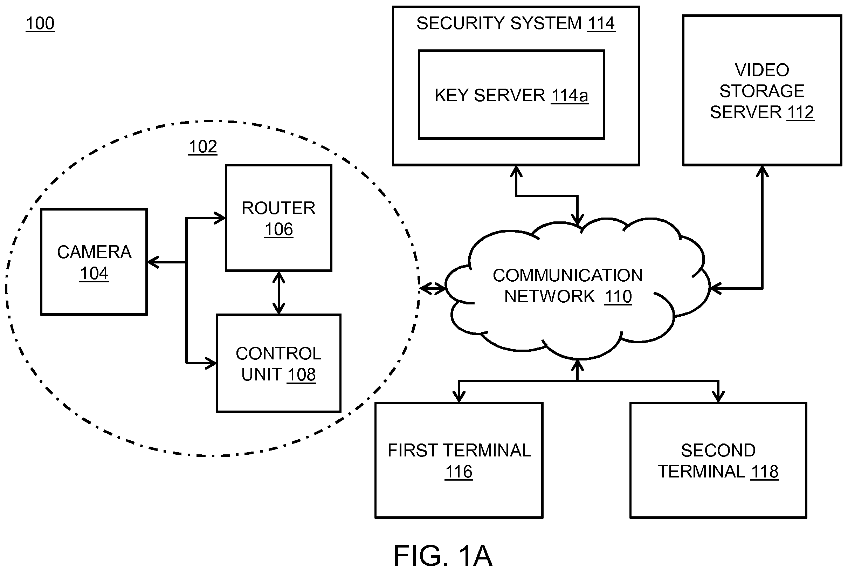

Referring now to the drawings, particularly by their reference numbers, FIG. 1A illustrates a system **100** for providing an access to a video content, in accordance with an embodiment of the present disclosure. The system **100** is enabled for recording and encrypting one or more videos. The system **100** includes a facility **102** having a camera **104** (such as a video camera) installed therein. The system **100** also includes a router **106** and a control unit **108** installed in the facility **102,** and operatively coupled to each other and to the video camera **104.** The system **100** also includes a video storage server **112** communicably coupled to the router **106** via a communication network **110.** The video storage server **112** is configured to receive and store video data send by the video camera **104** through the communication network **110.** The system **100** also includes a security system **114** having a key server **114a** configured to provide a group of encrypting keys. The video data is adapted to be encrypted using the encryption keys. The encryption is done in the video camera **104.** The video camera **104** is configured to detect triggering events based on which the encryption keys for the video data are changed. The system **100** also includes a first terminal **116** and a second terminal **118** configured to access the video data from the video storage server **112** based on authorized encrypting keys.

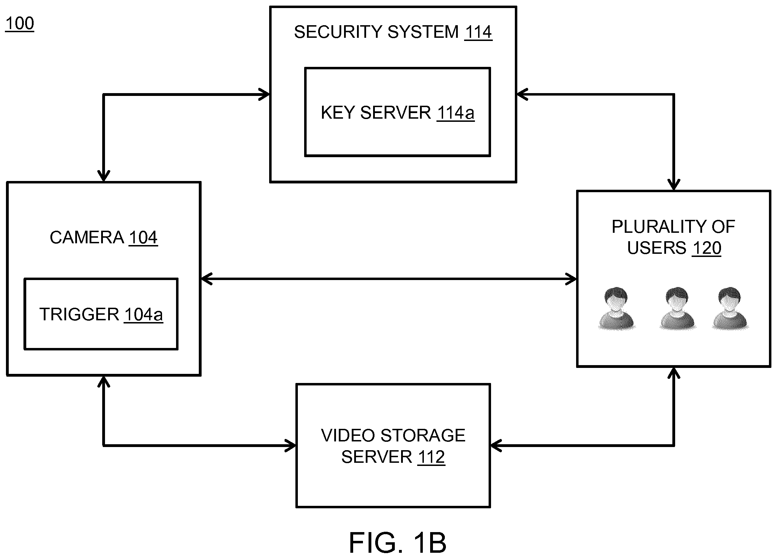

FIG. 1B illustrates a system **100** for providing the access to the video content to the one or more users, in accordance with an embodiment of the present disclosure. The system **100** includes the video camera **104** configured to record one or more videos. The system **100** also includes the video storage server **112** operatively coupled to the security system **114** and the key server **114a.** The video camera **104** is associated with a plurality of users **120.** The video camera **104** is installed inside the facility **102.** The video camera **104** includes a trigger **104a.** The trigger **104a** is configured to detect the triggering event. In addition, the video camera **104** is communicatively coupled with the video storage server **112** and the security system **114.** The video storage server **112** is configured to receive and store the video data send by the video camera **104.** The plurality of users **120** access the video data provided by the video storage server **112.**

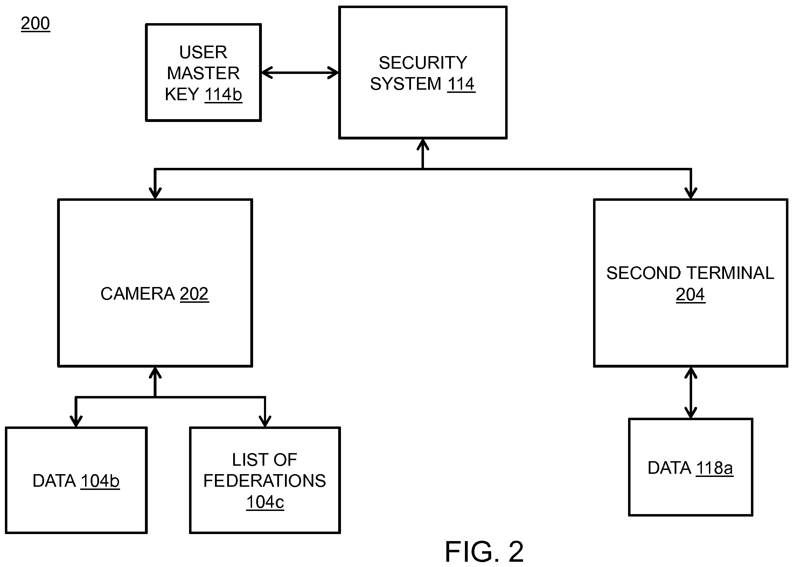

FIG. 2 illustrates a system **200** for providing access to the video content to one or more third parties, in accordance with an embodiment of the present disclosure. The system **200** illustrates a mechanism for sharing data with the one or more third parties. The system **200** includes the security system **114,** a sending video camera **202** associated with the security system **114** and a receiving second terminal **204** associated with the security system **114.** The security system **114** maintains the repository of the group of encryption keys. The security system **114** includes the key server **114a** (shown in FIG. 1A) for storing the group of encryption keys. In addition, the security system **114** includes a user master key **114b.** The user master key **114b** is configured for encrypting an encrypted format associated with a group of encryption keys. The sending video camera **202** controls the access to the video data and maintains a list of authorized users. The sending video camera **202** has a data **104b** and a list of federations **104c.** The sending video camera **202** transmits the data **104b** to the one or more third parties. The list of federations **104c** corresponds to a list of users defined by the sending user for providing access to the video content. The receiving second terminal **204** accesses the video data based on authorization from the security system **114.** The receiving second terminal **204** has a data **118a.** The data **118a** corresponds to the data received from the sending video camera **202** for accessing the video content.

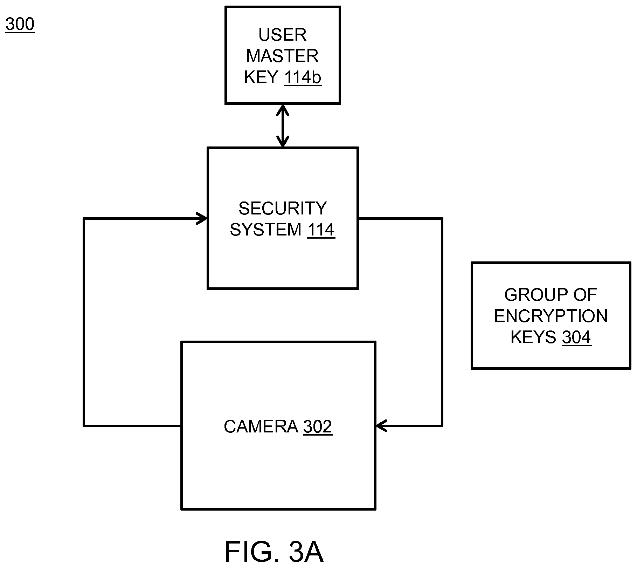

FIG. 3A illustrates a system **300** showing an example for encrypting the video data, in accordance with an embodiment of the present disclosure. The system **300** includes the security system **114.** The security system **114** can be associated with a sender video camera **302.** In addition, the security system **114** includes the user master key **114b.** The system **300** enables the encryption of the video data. The sending video camera **302** requests data keys from the security system **114.** The security system **114** provides a group of encryption keys **304** to the sending video camera **302** for encrypting the video data.

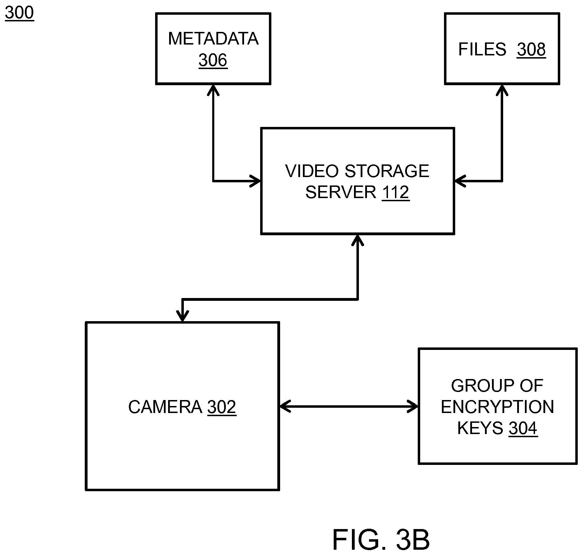

FIG. 3B illustrates a system **300** showing an example for encrypting and storing the encrypted videos, in accordance with an embodiment of the present disclosure. The system **300** includes the video storage server **112.** Further, the video storage server **112** includes metadata **306** and files **308.** The sending video camera **302** encrypts the video data by utilizing the group of encryption keys **304.** The video storage server **112** is configured to store the encrypted videos as the metadata **306** and the files **308.**

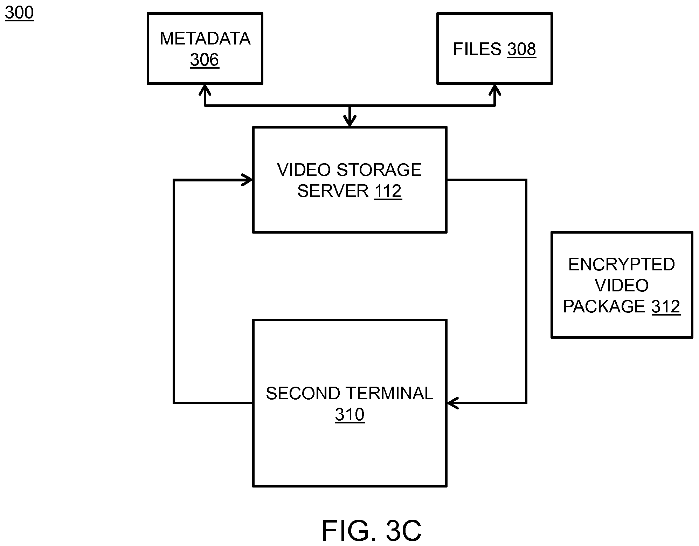

FIG. 3C illustrates a system **300** showing an example for accessing the encrypted videos, in accordance with an embodiment of the present disclosure. The system **300** includes the video storage server **112.** In addition, the video storage server **112** is associated with a receiving second terminal **310.** Further, the receiving second terminal **310** wants to access the encrypted video and sends a request to the video storage server **112.** The video storage server **112** is configured to transmit an encrypted video package **312** to the receiving second terminal **310.**

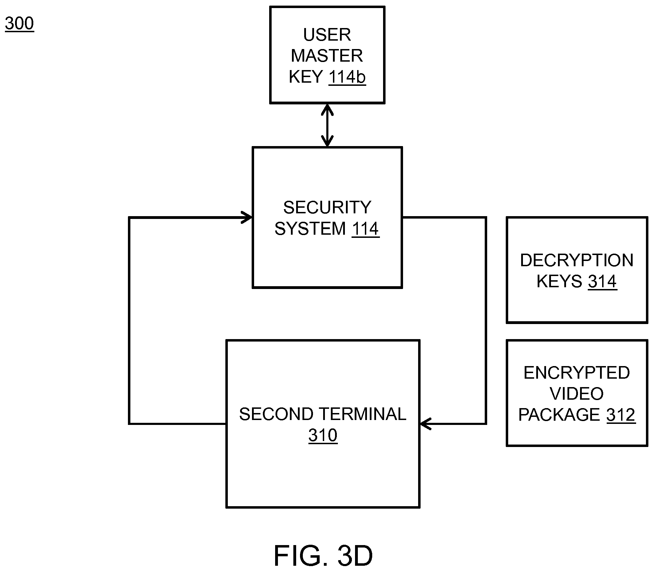

FIG. 3D illustrates a system **300** showing an example for decrypting the encrypted videos, in accordance with an embodiment of the present disclosure. The system **300** includes the security system **114.** The security system **114** includes the user master key **114b.** In addition, the security system **114** is associated with the receiving second terminal **310.** The security system **114** is configured to provide decryption keys **314** to the receiving second terminal **310** based on a decryption request. The receiving second terminal **310** decrypts the encrypted video package **312** with the decryption keys **314.**

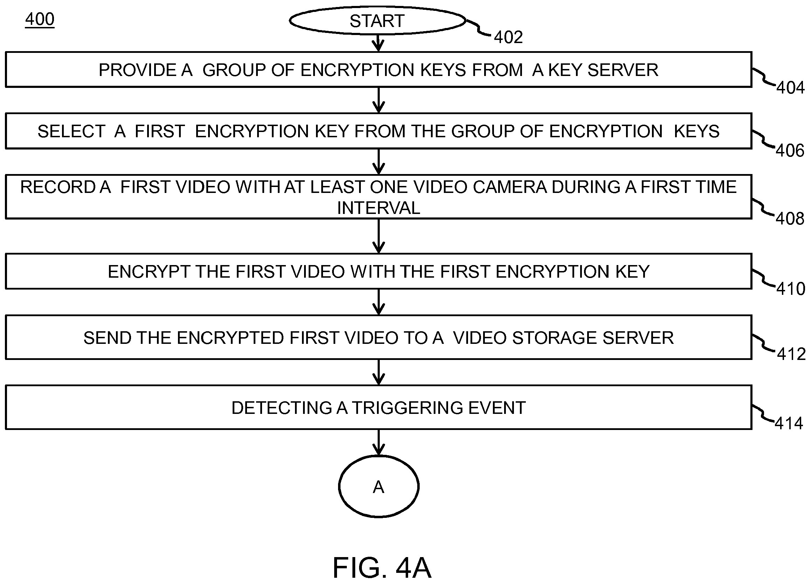

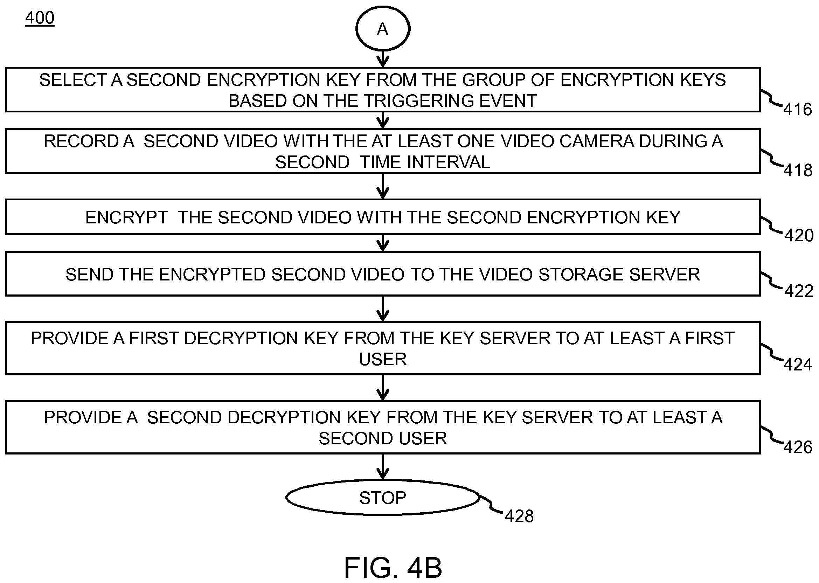

Referring now to FIGS. 4A-B, illustrated are steps of a method **400** for providing access to the video content, in accordance with various embodiments of the present disclosure. Those skilled in the art would recognize that the method **300** illustrates steps involved in the system **100** of the FIG. 1A.

The method **400** initiates at step **402.** Following step **402,** at step **404,** a group of encryption keys is provided from a key server.

At step **406,** a first encryption key is selected from the group of encryption keys.

At step **408,** at least one video camera records a first video during a first time interval.

At step **410,** the video camera encrypts the first video with the first encryption key.

At step **412,** the video camera sends the encrypted first video to a video storage server.

At step **414,** the video camera detects a triggering event.

At step **416,** the video camera selects a second encryption key from the group of encryption keys based on the triggering event.

At step **418,** the video camera records a second video during a second time interval.

At step **420,** the video camera encrypts the second video with the second encryption key.

At step **422,** the video camera sends the encrypted second video to the video storage server.

At step **424,** the key server provides a first decryption key to at least the first user.

At step **426,** the key server provides a second decryption key to at least the second user. Then at step **428,** the method **400** terminates.

## Claims

1. A method for providing access to a video content, comprising steps of
- providing a first encryption key;
- recording a first video with at least one video camera during a first time interval;
- encrypting the first video with the first encryption key;
- sending the encrypted first video to a video storage server;
- detecting a triggering event;
- providing a second encryption key based on the triggering event;
- recording a second video with the at least one video camera during a second time interval;
- encrypting the second video with the second encryption key;
- sending the encrypted second video to the video storage server; **characterized by**
- transmitting the first and the second encryption keys and a first and a second decryption keys in ciphertext format encrypted using the first user's master key to the video storage server;
- decrypting the first and the second encryption keys and the first and the second decryption keys from ciphertext format using the first user's master key;
- providing the first decryption key to at least a first user wherein the first decryption key is usable to decrypt the encrypted first video; and
- based on an authorization of a second user as granted by the first user, providing the second decryption key to at least the second user wherein the second decryption key is usable to decrypt the encrypted second video.

2. A method according to claim 1, wherein the triggering event is selected from group consisting of
- receiving an alarm from a security alarm;
- detecting a command from a user interface of a security system;
- receiving an alarm from a fire alarm system; and
- receiving a request from a communication device via a communication network.

3. A method according to any of the preceding claims, wherein a terminal associated with the at least first user is configured to receive the first encrypted video from the video storage server, to receive the first decryption key and to decrypt the video with the terminal using the first decryption key.

4. A method according to any of the preceding claims, wherein the encryption keys are provided by the at least one video camera.

5. A method according to any of the preceding claims, wherein the encryption is done according to an Advanced Encryption Standard.

6. A method according to any of the preceding claims, wherein the method comprises providing a group of encryption keys from a key server and selecting the first and second encryption keys from said group of encryption keys.

7. A method according to claim 6, wherein the key server is different from the video storage server.

8. A method according to claim 6 or 7, wherein the group of encryption keys is provided to the at least one video camera.

9. A method according to claim 6 or 7, wherein the group of encryption keys is provided to a gateway, which gateway is communicatively coupled with the at least one video camera.

10. A system for providing access to a video content, the system comprising
- at least one video camera;
- a communication interface for communicating with at least one external system and for receiving triggers from triggering events; and
- a central processing unit coupled to a memory, which memory is configured to
- buffer video from the at least one video camera, and
- store instructions,
wherein the central processing unit, based on the instructions stored in the memory, is configured to
- provide a first encryption key,
- use the first encryption key to encrypt the buffered video to make an encrypted first video having duration of a first time interval,
- send the encrypted first video to a video storage server via the communication interface,
- monitor triggers received via the communication interface,
- provide a second key based on the type of the trigger,
- use the second key to encrypt the buffered video to make an encrypted second video having duration of a second time interval,
- send the encrypted second video to a video storage server via the communication interface, **characterized by** being configured to
- transmit the first and the second encryption keys and a first and a second decryption keys in ciphertext format encrypted using the first user's master key to the video storage server;
- decrypt the first and the second encryption keys and the first and the second decryption keys from ciphertext format using the first user's master key;
- provide the first decryption key to at least a first user wherein the first decryption key is usable to decrypt the encrypted first video and
- based on an authorization of a second user as granted by the first user, provide the second decryption key to at least the second user wherein the second decryption key is usable to decrypt the second encrypted video.

11. A system according to claim 10, wherein the central processing unit is further configured to receive a group of encryption keys from a key server via the communication interface and store them in the memory, and to select the key from the group of encryption keys based on the type of the trigger.

12. A system according to claim 10, wherein the at least one video camera is configured to provide the encryption key.

13. A system according to any of the claims 10-12, further comprising a gateway communicatively coupled with the at least one video camera.

14. A system according to any of the claims 10-13, wherein the encryption is done according to an Advanced Encryption Standard.

## Patentansprüche

1. Verfahren zur Gewährung des Zugriffs auf einen Videoinhalt, das folgende Schritte umfasst:
- Bereitstellung eines ersten Chiffrierungscodes;
- Aufnehmen eines ersten Videos mit mindestens einer Videokamera während eines ersten Zeitintervalls;
- Chiffrierung des ersten Videos mit dem ersten Chiffrierungsschlüssel;
- Senden des ersten chiffrierten Videos an einen Videospeicherserver;
- Erkennen eines auslösenden Ereignisses;
- Bereitstellung eines zweiten Chiffrierungsschlüssels auf der Grundlage des auslösenden Ereignisses;
- Aufnehmen eines zweiten Videos mit der mindestens einen Videokamera während eines zweiten Zeitintervalls;
- Chiffrieren des zweiten Videos mit dem zweiten Chiffrierungsschlüssel;
- Senden des chiffrierten zweiten Videos an den Videospeicherserver; **gekennzeichnet durch**
- die Übertragung des ersten und zweiten Chiffrierungsschlüssels und eines ersten und eines zweiten Dechiffrierungsschlüssels im Chiffretextformat, die mit dem Hauptschlüssel des ersten Benutzers chiffriert wurden, an den Videospeicherserver;
- Dechiffrierung des ersten und zweiten Chiffrierungsschlüssels und des ersten und zweiten Dechiffrierungsschlüssels aus dem Chiffretextformat unter Verwendung des Hauptschlüssels des ersten Benutzers;
- Bereitstellung des ersten Dechiffrierungsschlüssels für mindestens einen ersten Benutzer, wobei der erste Dechiffrierungsschlüssel zum Dechiffrieren des chiffrierten ersten Videos verwendbar ist; und
- basierend auf einer vom ersten Benutzer erteilten Autorisierung eines zweiten Benutzers, wobei der zweite Dechiffrierungsschlüssel mindestens dem zweiten Benutzer zur Verfügung gestellt wird und der zweite Dechiffrierungsschlüssel zum Dechiffrieren des chiffrierten zweiten Videos verwendbar ist.

2. Verfahren nach Anspruch 1, bei dem das auslösende Ereignis aus der Gruppe ausgewählt wird, bestehend aus:
- Empfang eines Alarms von einem Sicherheitsalarm;
- Erkennung eines Befehls von einer Benutzerschnittstelle eines Sicherheitssystems;
- Empfang eines Alarms von einem Feueralarmsystem; und
- Empfang einer Anfrage von einem Kommunikationsgerät über ein Kommunikationsnetz.

3. Verfahren nach einem der vorstehenden Ansprüche, bei dem ein Terminal, das dem mindestens ersten Benutzer zugeordnet ist, so konfiguriert ist, dass es das erste chiffrierte Video vom Videospeicherserver empfängt, den ersten Dechiffrierungsschlüssel empfängt und das Video mit dem Terminal dechiffriert, das den ersten Dechiffrierungsschlüssel verwendet.

4. Verfahren nach einem der vorstehenden Ansprüche, bei dem die Chiffrierungsschlüssel von der mindestens einen Videokamera bereitgestellt werden.

5. Verfahren nach einem der vorstehenden Ansprüche, bei dem die Chiffrierung nach einem Advanced Encryption Standard erfolgt.

6. Verfahren nach einem der vorstehenden Ansprüche, bei dem das Verfahren die Bereitstellung einer Gruppe von Chiffrierungsschlüsseln von einem Schlüsselserver und die Auswahl des ersten und zweiten Chiffrierungsschlüssels aus der Gruppe von Chiffrierungsschlüsseln umfasst.

7. Verfahren nach Anspruch 6, bei dem der Schlüsselserver nicht der Videospeicherserver ist.

8. Verfahren nach Anspruch 6 oder 7, bei dem die Gruppe der Chiffrierungsschlüssel der mindestens einen Videokamera zur Verfügung gestellt wird.

9. Verfahren nach Anspruch 6 oder 7, bei dem die Gruppe der Chiffrierungsschlüssel einem Gateway zur Verfügung gestellt wird, das kommunikativ mit der mindestens einen Videokamera verbunden ist.

10. System zur Gewährung des Zugriffs auf einen Videoinhalt, wobei das System umfasst:
- mindestens eine Videokamera;
- eine Kommunikationsschnittstelle zur Kommunikation mit mindestens einem externen System und zum Empfang von Auslöseimpulsen aus auslösenden Ereignissen; und
- eine Zentraleinheit, die mit einem Speicher verbunden ist, welcher Speicher so vorgesehen ist, dass er
- das Video von der mindestens einen Videokamera zwischenspeichert und
- Befehle speichert,
wobei die Zentraleinheit auf der Grundlage der in dem Speicher gespeicherten Befehle so konfiguriert ist, dass sie
- einen ersten Chiffrierungsschlüssel bereitstellt,
- den ersten Chiffrierungsschlüssel zum Chiffrieren des zwischengespeicherten Videos benutzt, um ein chiffriertes erstes Video von der Dauer eines ersten Zeitintervalls herzustellen,
- das erste chiffrierte Video über die Kommunikationsschnittstelle an einen Videospeicherserver sendet,
- die über die Kommunikationsschnittstelle empfangenen Auslöseimpulse überwacht,
- einen zweiten Schlüssel bereitstellt, der auf der Art des Auslöseimpulses basiert,
- den zweiten Schlüssel zum Chiffrieren des zwischengespeicherten Videos benutzt, um ein chiffriertes zweites Video von der Dauer eines zweiten Zeitintervalls herzustellen,
- das zweite chiffrierte Video über die Kommunikationsschnittstelle an einen Videospeicherserver sendet, **dadurch gekennzeichnet, dass** sie so konfiguriert ist, dass sie
- den ersten und zweiten Chiffrierungsschlüssel und einen ersten und zweiten Dechiffrierungsschlüssel im Chiffretextformat, die mit dem Hauptschlüssel des ersten Benutzers chiffriert wurden, an den Videospeicherserver überträgt;
- den ersten und zweiten Chiffrierungsschlüssel und den ersten und zweiten Dechiffrierungsschlüssel aus dem Chiffretextformat unter Verwendung des Hauptschlüssels des ersten Benutzers dechiffriert;
- den ersten Dechiffrierungsschlüssel für mindestens einen ersten Benutzer bereitstellt, wobei der erste Dechiffrierungsschlüssel zum Dechiffrieren des chiffrierten ersten Videos verwendbar ist und
- basierend auf einer vom ersten Benutzer erteilten Autorisierung für einen zweiten Benutzer den zweiten Dechiffrierungsschlüssel mindestens dem zweiten Benutzer zur Verfügung stellt, wobei der zweite Dechiffrierungsschlüssel zum Dechiffrieren des chiffrierten zweiten Videos verwendbar ist.

11. System nach Anspruch 10, bei dem die Zentraleinheit ferner so konfiguriert ist, dass sie eine Gruppe von Chiffrierungsschlüsseln von einem Schlüsselserver über die Kommunikationsschnittstelle empfängt und im Speicher speichert und den Schlüssel aus der Gruppe von Chiffrierungsschlüsseln auf der Grundlage der Art des Auslöseimpulses auswählt.

12. System nach Anspruch 10, bei dem die mindestens eine Videokamera so konfiguriert ist, dass sie den Chiffrierungsschlüssel zur Verfügung stellt.

13. System nach einem der Ansprüche 10-12, das ferner ein Gateway umfasst, das kommunikativ mit der mindestens einen Videokamera verbunden ist.

14. System nach einem der Ansprüche 10-13, bei dem die Chiffrierung nach einem Advanced Encryption Standard erfolgt.

## Revendications

1. Procédé permettant de fournir un accès à un contenu vidéo, comprenant les étapes de
- la fourniture d'une première clé de chiffrement ;
- l'enregistrement d'une première vidéo avec au moins une caméra vidéo pendant un premier intervalle de temps ;
- le chiffrement de la première vidéo avec la première clé de chiffrement ;
- l'envoi de la première vidéo chiffrée à un serveur de stockage de vidéos ;
- la détection d'un événement de déclenchement ;
- la fourniture d'une seconde clé de chiffrement sur la base de l'événement de déclenchement ;
- l'enregistrement d'une seconde vidéo avec l'au moins une caméra vidéo pendant un second intervalle de temps ;
- le chiffrement de la seconde vidéo avec la seconde clé de chiffrement ;
- l'envoi de la seconde vidéo chiffrée au serveur de stockage de vidéos ;
**caractérisé par**
- l'émission de la première et de la seconde clé de chiffrement et d'une première et d'une seconde clé de déchiffrement au format cryptogramme chiffrées à l'aide de la clé maître du premier utilisateur vers le serveur de stockage de vidéos ;
- le déchiffrement de la première et de la seconde clé de chiffrement et de la première et de la seconde clé de déchiffrement à partir du format cryptogramme à l'aide de la clé maître du premier utilisateur ;
- la fourniture de la première clé de déchiffrement à au moins un premier utilisateur, dans lequel la première clé de déchiffrement est utilisable pour déchiffrer la première vidéo chiffrée ; et
- sur la base d'une autorisation d'un second utilisateur telle qu'accordée par le premier utilisateur, la fourniture de la seconde clé de déchiffrement au moins au second utilisateur, dans lequel la seconde clé de déchiffrement est utilisable pour déchiffrer la seconde vidéo chiffrée.

2. Procédé selon la revendication 1, dans lequel l'événement de déclenchement est sélectionné parmi le groupe constitué de
- la réception d'une alarme à partir d'une alarme de sécurité ;
- la détection d'une instruction à partir d'une interface utilisateur d'un système de sécurité ;
- la réception d'une alarme à partir d'un système d'alarme incendie ; et
- la réception d'une demande à partir d'un dispositif de communication via un réseau de communication.

3. Procédé selon l'une quelconque des revendications précédentes, dans lequel un terminal associé avec l'au moins premier utilisateur est configuré pour recevoir la première vidéo chiffrée à partir du serveur de stockage de vidéos, pour recevoir la première clé de déchiffrement et pour déchiffrer la vidéo avec le terminal à l'aide de la première clé de déchiffrement.

4. Procédé selon l'une quelconque des revendications précédentes, dans lequel les clés de chiffrement sont fournies par l'au moins une caméra vidéo.

5. Procédé selon l'une quelconque des revendications précédentes, dans lequel le chiffrement est effectué conformément à une norme Advanced Encryption Standard.

6. Procédé selon l'une quelconque des revendications précédentes, dans lequel le procédé comprend la fourniture d'un groupe de clés de chiffrement à partir d'un serveur de clés et la sélection des première et seconde clés de chiffrement à partir dudit groupe de clés de chiffrement.

7. Procédé selon la revendication 6, dans lequel le serveur de clés est différent du serveur de stockage de vidéos.

8. Procédé selon la revendication 6 ou 7, dans lequel le groupe de clés de chiffrement est fourni à l'au moins une caméra vidéo.

9. Procédé selon la revendication 6 ou 7, dans lequel le groupe de clés de chiffrement est fourni à une passerelle, laquelle passerelle est couplée en communication avec l'au moins une caméra vidéo.

10. Système permettant de fournir un accès à un contenu vidéo, le système comprenant
- au moins une caméra vidéo ;
- une interface de communication permettant de communiquer avec au moins un système externe et permettant de recevoir des déclencheurs à partir d'événements de déclenchement ; et
- une unité centrale de traitement couplée à une mémoire, laquelle mémoire est configurée pour
- mettre en mémoire tampon une vidéo à partir de l'au moins une caméra vidéo, et
- stocker des instructions,
dans lequel l'unité centrale de traitement, sur la base des instructions stockées dans la mémoire, est configurée pour
- fournir une première clé de chiffrement,
- utiliser la première clé de chiffrement pour chiffrer la vidéo mise en mémoire tampon pour créer une première vidéo chiffrée ayant une durée d'un premier intervalle de temps,
- envoyer la première vidéo chiffrée à un serveur de stockage de vidéos via l'interface de communication,
- surveiller des déclencheurs reçus via l'interface de communication,
- fournir une seconde clé sur la base du type du déclencheur,
- utiliser la seconde clé pour chiffrer la vidéo mise en mémoire tampon pour créer une seconde vidéo chiffrée ayant une durée d'un second intervalle de temps,
- envoyer la seconde vidéo chiffrée à un serveur de stockage de vidéos via l'interface de communication, **caractérisé par le fait qu'**il est configuré pour
- émettre la première et la seconde clé de chiffrement et une première et une seconde clé de déchiffrement au format cryptogramme chiffrées à l'aide de la clé maître du premier utilisateur vers le serveur de stockage de vidéos ;
- déchiffrer la première et la seconde clé de chiffrement et la première et la seconde clé de déchiffrement à partir du format cryptogramme à l'aide de la clé maître du premier utilisateur ;
- fournir la première clé de déchiffrement à au moins un premier utilisateur, dans lequel la première clé de déchiffrement est utilisable pour déchiffrer la première vidéo chiffrée et
- sur la base d'une autorisation d'un second utilisateur telle qu'accordée par le premier utilisateur, fournir la seconde clé de déchiffrement au moins au second utilisateur, dans lequel la seconde clé de déchiffrement est utilisable pour déchiffrer la seconde vidéo chiffrée.

11. Système selon la revendication 10, dans lequel l'unité centrale de traitement est en outre configurée pour recevoir un groupe de clés de chiffrement à partir d'un serveur de clés via l'interface de communication et les stocker dans la mémoire, et pour sélectionner la clé à partir du groupe de clés de chiffrement sur la base du type du déclencheur.

12. Système selon la revendication 10, dans lequel l'au moins une caméra vidéo est configurée pour fournir la clé de chiffrement.

13. Système selon l'une quelconque des revendications 10 à 12, comprenant en outre une passerelle couplée en communication avec l'au moins une caméra vidéo.

14. Système selon l'une quelconque des revendications 10 à 13, dans lequel le chiffrement est effectué conformément à une norme Advanced Encryption Standard.
